# EUROPEAN PATENT SPECIFICATION

(11) **EP 4 122 636 B1**
(45) Date of publication and mention of the grant of the patent: **29.01.2025**
(21) Application number: 20926072.8
(22) Date of filing: 11.05.2020
(51) Int. Cl.: B23K 26/21, G02B 3/00, B23K 26/06, B23K 26/064, B23K 26/073, G02B 3/06, G02B 7/10, G02B 13/12, H01S 3/00

(54) **LASER WELDING DEVICE**
LASERSCHWEISSVORRICHTUNG
APPAREIL DE SOUDAGE LASER

(30) Priority: 17.03.2020 CN 202010187307
(43) Date of publication of application: 25.01.2023
(73) Proprietor: United Winners Laser Co., Ltd., Shenzhen, Guangdong 518118 (CN)
(72) Inventor: CHKUN, Tatsuro, Tokyo 141-0031 (JP); NIU, Zengqiang, Shenzhen, Guangdong 518118 (CN); CHEN, Guoning, Shenzhen, Guangdong 518118 (CN); LU, Guojie, Shenzhen, Guangdong 518118 (CN); HAN, Jinlong, Shenzhen, Guangdong 518118 (CN)
(74) Representative: Cabinet Chaillot
(86) International application number: PCT/CN2020/089531
(87) International publication number: WO 2021/184519

(56) References cited:
- CN-A- 103 722 290
- CN-A- 110 087 817
- CN-U- 206 952 364
- DE-A1- 102017 208 979
- US-A1- 2005 052 755
- US-A1- 2009 294 412
- US-A1- 2014 097 161
- US-A1- 2019 389 001

## Description

### FIELD OF THE INVENTION

The present invention relates to the field of laser machining, and more particularly to a laser welding apparatus according to the preamble of claim 1 (see for example US 2019/389001 A1).

### DESCRIPTION OF THE RELATED ART

In the manufacturing of high-silicon steel plates or in the manufacturing of laminations of iron cores of transformers and electrical motors, welding portions often suffer defects, such as being easy to crack in a low temperature. Steel plates that contain silicon exhibit an excellent soft magnetic property and are commonly used for an iron core of a power converter or electrical motor. With an increase of the silicon content, such a soft magnetic material demonstrates excellent iron loss characteristics and the magneto-strictive rate approaches zero, and thus, magnetic permeability is also enhanced, making it an excellent novel magnetic material. Recently, the soft magnetic material is regarded as a novel magnetic material targeting a purpose of energy saving, featuring low iron loss, and meeting various needs of magnetic characteristics for electrical devices. However, once the silicon concentration exceeds 4.3wt%, if known welding techniques are adopted in room temperature, deformation may happen during welding and cracking may easily develop in the welding portions in the low temperature.

On the other hand, it is commonplace to implement preheating or post-heating in welding to prevent the occurrence of cracking. To implement post-heating in a high temperature, dedicated post-heating measure must be adopted. Post-heating may result in thermal distortion. If such a process is applied in the welding of a product handling process, dimensional accuracy declines and product property deteriorates.

### SUMMARY OF THE INVENTION

In view of the above, in order to resolve the above issues, an objective of the present invention is to provide a laser apparatus that is applicable, in a flexible way, to various lasers and is operable with high durability.

To resolve the above technical issues, the present invention provides, according to claim 1, for a laser welding head that uses a collimation lens and a condensing lens to form an image with laser light emerging from an optical fiber, a hollowed convex cylindrical lens or a concave cylindrical lens having a longer focal distance to be arranged in front of the collimation lens (or behind the collimation lens or behind the condensing lens). The hollowed portion allows a light beam around a center of the optical fiber to pass therethrough to be collimated and condensed by the welding head to form a high power density spot. On the other hand, a light beam that distantly deviates from the center of the optical fiber is subjected to change of the location of the focal point by means of the convex cylindrical lens/the concave cylindrical lens having a relatively long focal distance so as to deviate from the focal point of the light beam passing through the hollowed portion to thereby form a circular high power density spot and an elongate strip like lower power density spot overlapping each other on a welding plane. The high power density spot is small and may achieve keyhole welding.

Further preferred embodiments of the present invention are defined in the dependent claims.

In the above technical solution, a light beam around a center of the optical fiber passes, without loss, a void or hollowed portion of the cylindrical lens that is arranged in front of or behind the collimation lens or behind the condensing lens to get focused on a workpiece surface, without being subject to any influence, while remaining light beams that transmit through a curved portion of the cylindrical lens changes a beam angle thereof in transmission through the optical axis in individual direction due to the curved surface of the cylindrical lens and after convergence of the light beams, the locations of focal points in the individual direction shift relative to the location of the focal point of the central light beam, either moving frontwards or moving rearwards, and therefore two spots are formed on the surface of the workpiece, one being a high power density spot, and the other being a lower power density spot. This prevents the occurrence of welding cracking and may thus help enhance quality and yield.

According to the present invention, by changing a distance between an output end of the optical fiber and the cylindrical lens and, a distance between the cylindrical lens and the condensing lens, it is possible to adjust a power ratio between the high power density spot and the lower power density spot.

According to the present invention, since it is possible to simply switch cylindrical lenses of different hollow opening sizes, it is possible to greatly change the extent of the processing condition and also to conduct welding on various shapes and materials in an easy and high-quality way.

According to the present invention, by changing the location of the cylindrical lens to cause the optical axis of the cylindrical lens to deviate from the original optical axis, it is possible to adjust a relative position between the high power density spot and the lower power density spot for finely changing the process condition to further enhance the quality of welding.

Further, by taking a flat-top cylindrical lens of which a cylinder middle portion is flat to substitute the cylindrical lens, it is possible to further enhance durability of the laser.

### BRIEF DESCRIPTION OF THE DRAWINGS

FIG 1 is a diagram of an entire structure of a laser apparatus according to an embodiment; 1(a) being a side elevational view, 1(b) being a top plan view;
FIG 2 is a basic structure diagram of a laser light source according to a first embodiment, 2(a) being a side elevational view of a convex cylindrical lens barrel diagram, 2(b) being a top plan view of the convex cylindrical lens barrel diagram, 2(c) being a side elevational view of a concave cylindrical lens barrel diagram;
FIG 3 is a basic structure diagram of a laser light source according to a second embodiment; 3(a) being a side elevational view of a convex cylindrical lens barrel diagram, 3(b) being a top plan view of the convex cylindrical lens barrel diagram, 3(c) being a side elevational view of a concave cylindrical lens barrel diagram;
FIG 4 is a basic structure diagram of a laser light source according to a third embodiment; 4(a) being a side elevational view of a convex cylindrical lens barrel diagram, 4(b) being a top plan view of the convex cylindrical lens barrel diagram, 4(c) being a side elevational view of a concave cylindrical lens barrel diagram;
FIG 5 is a schematic view illustrating adjustment of the laser light source of the first, second, and third embodiment; 5(a) being a diagram of moving of a cylindrical lens; 5(b) being a view showing an original spot shape; 5(c) being a view showing an adjusted spot shape;
FIG 6 is a basic structure diagram of a laser light source according to a fifth embodiment, 6(a) being a side elevational view of a cylindrical lens barrel diagram, 6(b) being a top plan view of the cylindrical lens barrel diagram; and

Table 1 shows results of the embodiments and the prior art.

### DETAILED DESCRIPTION OF EMBODIMENTS

The following embodiments are provided for further explanation and supplementation of the present invention and are not construed as limitation to the present invention. The following, as taken in combination with the attached drawings, provides a detailed description of a technical solution of the present invention.

### EMBODIMENT 1

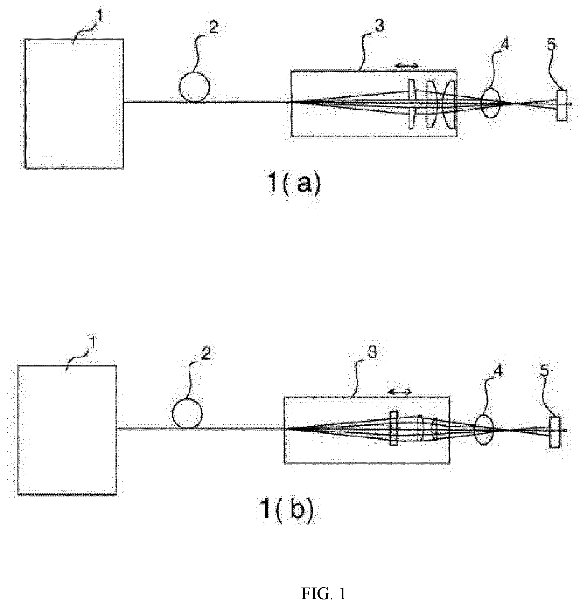

FIG 1 is an overall structure diagram showing a laser apparatus according to the instant embodiment, wherein 1(a) is a side elevational view and 1(b) is a top view. Mixed light 4 produced as coming from a fiber laser 1 and transmitting through a single-core optical fiber 2 to pass through a barrel is applied to conduct welding on a welding object 5. In the instant embodiment, the barrel is a mixing emergent barrel 3, which functions for beam shaping and converging of the emergent light coming from the single-core optical fiber, in order to realize a combined/hybrid welding of high power density spot and/or lower power density spot.

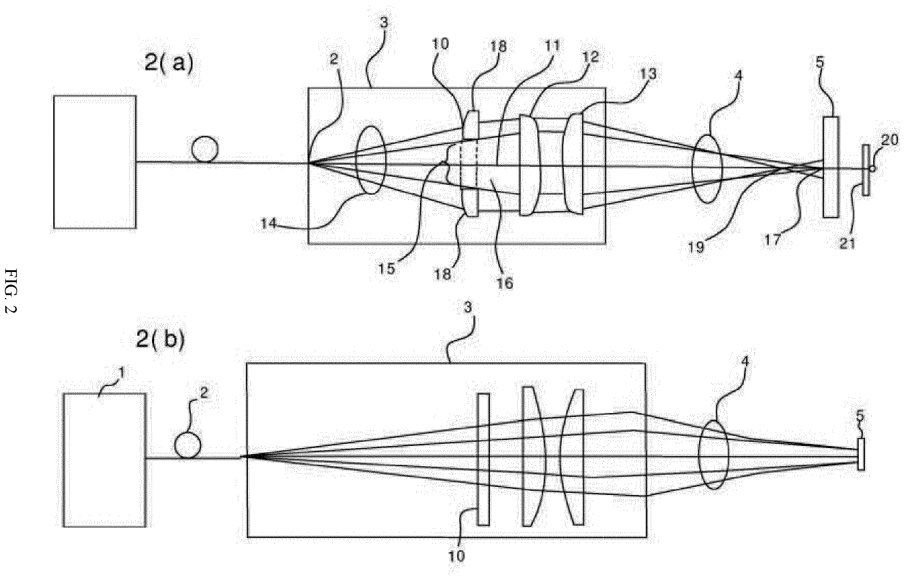

FIG 2(a) is a side elevational view of the basic structure of the laser apparatus according to the first embodiment.

The laser apparatus includes a convex cylindrical lens 10 added between the optical fiber 2 and a collimation lens 12. In an interior of the mixing emergent barrel 3, the cylindrical lens 10, the collimation lens 12, and a condensing lens 13 are sequentially arranged on the same optical axis 11 as the single-core optical fiber 2.

In laser light 14 emerging from the single-core optical fiber 2, laser light 16 that passes through a hollowed portion 15 of the convex cylindrical lens 10 is collimated by the collimation lens 12 and then condensed by the condensing lens 13, and a high-luminance focal point 20 that satisfies keyhole welding can be formed on a condensing point 17.

On the other hand, an incident angle of the laser light 16 that transmits through a non-hollowed convex lens portion 18 of the convex cylindrical lens 10, after transmitting through the collimation lens 12, is slightly changed, by a plano-convex cylindrical lens, with respect to the condensing lens 13. After transmitting through the collimation lens 12, the light beam is converged at a site 19 that is slightly frontward of the light converging point 17, and then diffused again after the condensation. Due to be out of focusing, a lower power density spot 21, compared to the high power density of the condensing point 17, is formed on a working surface 5. The lower power density spot 21 functions for increasing temperature and preheating of a workpiece before keyhole welding, and allowing a cooling rate of the workpiece to slow down after welding, so as to provide an effect of preventing cracking generated after welding.

Further, such an intensity distribution can be varied by having the cylindrical lens 10 moved frontward or rearward, so as to better the welding condition.

Further, by changing the size of the hollowed portion 15, it is possible to adjust an intensity ratio between the high power density spot 20 and the lower power density spot 21, and can greatly change the welding condition.

FIG 2(b) is a top plan view of the basic structure diagram of the laser apparatus according to the first embodiment. In the direction of the top plan view, the cylindrical lens 10 shows no variation of curvature, and for laser light that pass through the hollowed portion 15 or that transmitting through the non-hollowed portion 18, the incident angle of the laser light does not change, so that no condensing point is formed on the site 19 in this direction, all being converged on the same focal plane as the condensing point 17. Thus, what can be obtained with the cylindrical lens is a mixed spot 21 of the high power density spot and the lower power density spot.

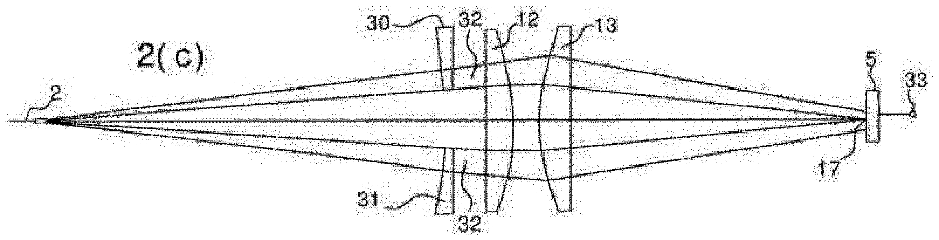

FIG 2(c) is a side elevational view of a basic structure diagram of the laser apparatus according to the first embodiment that includes a concave cylindrical lens 30. A difference from FIG 2(a) is that the lens is convex or concave, and common arrangements are omitted. In the case of concave cylindrical lens 30, the laser light 32 that transmits through a curved portion 31 that is not a hollowed portion of the cylindrical lens 30, after transmitting through the collimation lens 12, is incident to the condensing lens 13 and an incident angle of the laser light 32 is slightly expanded, so that location of the focal point relative to the condensing point 17 changes. On the focal plane of the condensing point 17, a lower power density spot 33 having a length of 100-10000µm and a width of 10-200um is formed. A top plan view of the basic structure diagram of the laser apparatus of the first embodiment including the concave cylindrical lens 30 is the same as FIG 2(b), and details will be omitted here.

### EMBODIMENT 2

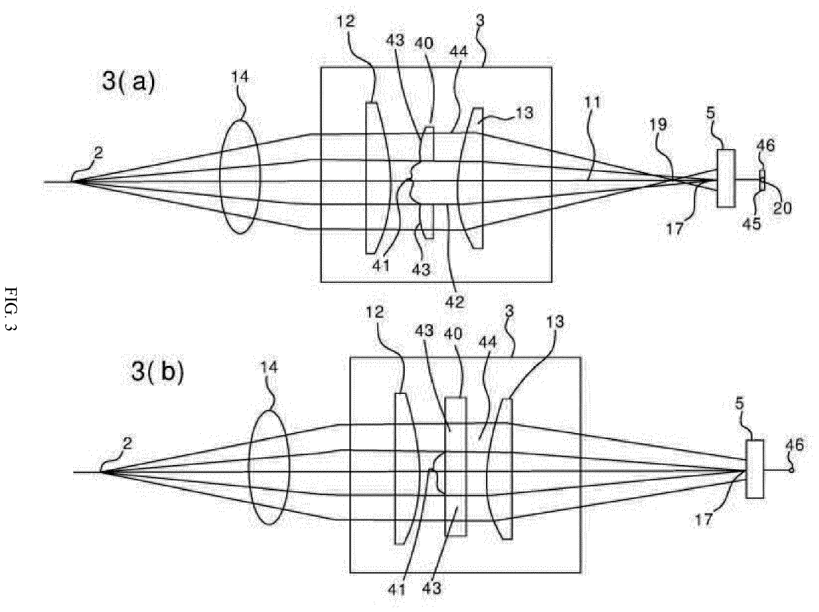

FIG 3(a) is a side elevational view of a basic structure diagram of a laser apparatus according to a second embodiment in which a convex cylindrical lens 40 is arranged between the collimation lens 12 and the condensing lens 13. In an interior of the mixing emergent barrel 3, the collimation lens 12, the convex cylindrical lens 40, and the condensing lens 13 are sequentially arranged on the same optical axis 11 as the single-core optical fiber 2.

Laser light 14 emerging from the single-core optical fiber 2 is collimated by the collimation lens 12, and then laser light 42 that passes through a hollowed portion 41 of the cylindrical lens 40 is condensed by the condensing lens 13, so as to form a high-luminance focal point 20 that satisfies keyhole welding on a condensing point 17.

On the other hand, laser light 44 that transmits through a non-hollowed portion 43 with a curved surface of the convex cylindrical lens 40 is incident to the condensing lens 13 and an incident angle of the laser light 44 is slightly changed, and thus converged at a site 19 that is slightly frontward of the converging point 17 and is then diffused again, and being out of focusing, a lower power density spot 45, compared to the high power density of the condensing point 17, is formed on a working surface 5.

Further, similar to FIG 2(a), by changing the size of the hollowed portion 41, it is possible to adjust an intensity ratio between the high power density spot 20 and the lower power density spot 45, and can greatly change the welding condition.

FIG 3(b) is a top plan view of the basic structure diagram of the laser apparatus according to the second embodiment. In the direction of the top plan view, the convex cylindrical lens 40 shows no variation of curvature, and for laser light that passes through the hollowed portion 41 or that transmitting through the non-hollowed portion 43, the incident angle of the laser light does not change, so that no condensing point is formed on the site 19 in this direction, all being converged on the same focal plane as the condensing point 17. Thus, what can be obtained with the cylindrical lens is a mixed spot 46 of the high power density spot and the lower power density spot.

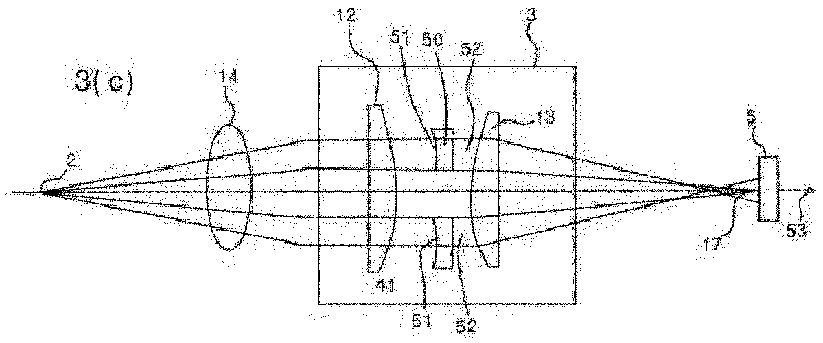

FIG 3(c) is a side elevational view of a basic structure diagram of the laser apparatus according to the second embodiment that includes a concave cylindrical lens 50. A difference from FIG 3(a) is that the lens is convex or concave, and common arrangements are omitted. For laser light that has been collimated by the collimation lens 12, the laser light 52 that transmits through a non- hollowed portion 51 with a curved surface of the concave cylindrical lens 50 is incident to the condensing lens 13 and an incident angle of the laser light 52 is slightly expanded, so that the location of the focal point relative to the condensing point 17 changes. On the focal plane of the condensing point 17, a lower power density spot 53 having a length: 100-10000µm and a width: 10-200um is formed. A top plan view of the basic structure diagram of the laser apparatus of the second embodiment including the concave cylindrical lens 50 is the same as FIG 3(b), and details will be omitted here.

### EMBODIMENT 3

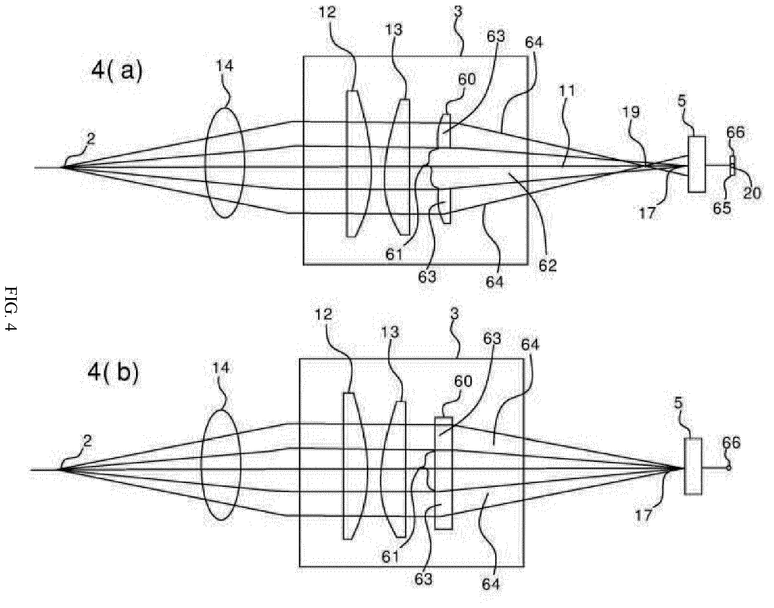

FIG 4(a) is a side elevational view of a basic structure diagram of a laser apparatus according to a third embodiment in which a convex cylindrical lens 60 is arranged after the condensing lens 13. In an interior of the mixing emergent barrel 3, the collimation lens 12, the condensing lens 13, and the convex cylindrical lens 60 are sequentially arranged on the same optical axis 11 as the single-core optical fiber 2.

Laser light 14 emerging from the single-core optical fiber 2 is collimated by the collimation lens 12 and then converged by the focusing lens 13. Laser light 62 of a portion of the converged light beam passes through a hollowed portion 61 of the convex cylindrical lens 60 so as to form a high-luminance focal point 20 that satisfies keyhole welding on a condensing point 17.

On the other hand, an exit angle of laser light 64 that transmits through a non-hollowed portion 63 with a curved surface of the convex cylindrical lens 60 is slightly changed and the laser light 64 exiting from the non-hollowed portion 63 is thus converged at a site 19 that is slightly frontward of the converging point and then diffused again. Due to being out of focusing, a lower power density spot 65, compared to the high power density of the condensing point 17, is formed on a working surface 5.

Further, such an intensity distribution can be varied by having the cylindrical lens 60 moved frontward or rearward, so as to better the welding condition.

Further, similar to FIG 2(a), by changing the size of the hollowed portion 61, it is possible to adjust an intensity ratio between the high power density spot 20 and the lower power density spot 65, and can greatly change the welding condition.

FIG 4(b) is a top plan view of the basic structure diagram of the laser apparatus according to the third embodiment. In the direction of the top plan view, the convex cylindrical lens 60 shows no variation of curvature, and for laser light that passes through the hollowed portion 61 or that transmitting through the non-hollowed portion 63, the exit angle of the laser light does not change, so that no condensing point is formed on the site 19 in this direction, all being converged on the same focal plane as the condensing point 17. Thus, what can be obtained with the cylindrical lens is a mixed spot 66 of the high power density spot and the lower power density spot.

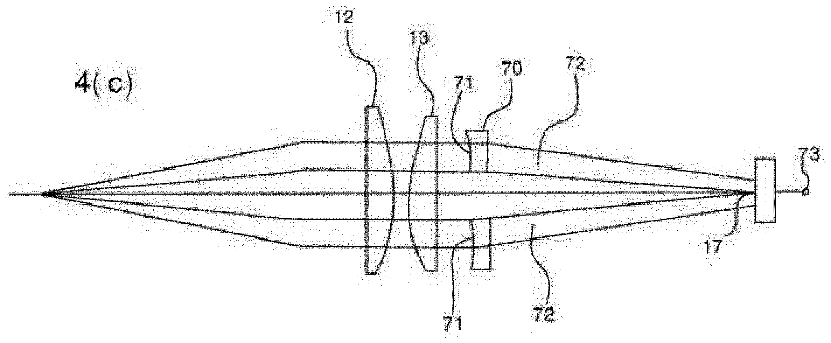

FIG 4(c) is a side elevational view of a basic structure diagram of the laser apparatus according to the third embodiment that includes a concave cylindrical lens 70. A difference from FIG 4(a) is that the lens 60 in FIG 4(a) is convex while the lens 70 in FIG 4(c) is concave, and common arrangements are omitted. For laser light that has been collimated by the collimation lens 12 and then focused by the focusing lens 13, an exit angle of the laser light 72 that transmits through a non-hollowed portion 71 with a curved surface of the concave cylindrical lens 70 is slightly changed so that the location of the focal point relative to the condensing point 17 changes. On the focal plane of the condensing point 17, a lower power density spot 73 having a length: 100-10000µm and a width: 10-200um is formed. A top plan view of the basic structure diagram of the laser apparatus of the third embodiment including the concave cylindrical lens 70 is the same as FIG 4(b), and details will be omitted here.

### EMBODIMENT 4

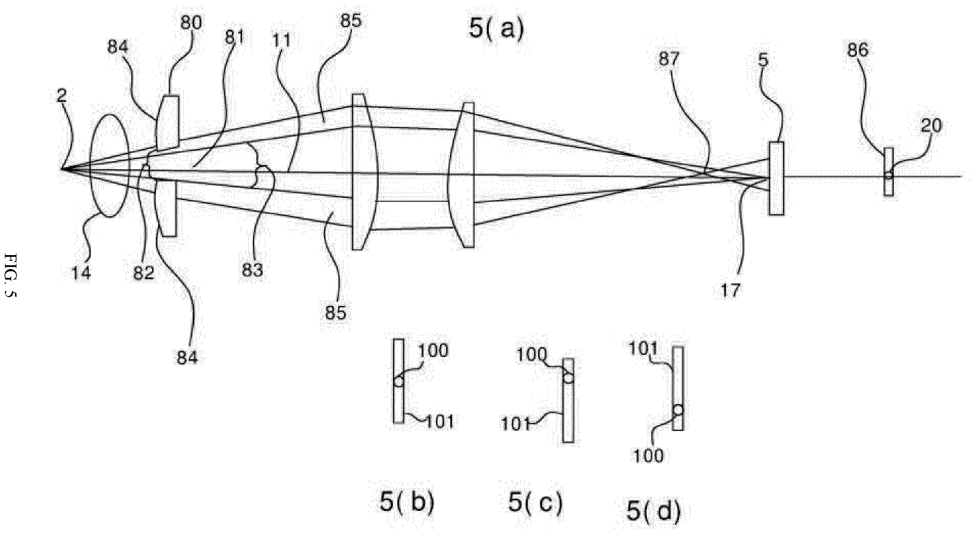

FIG 5(a) is a side elevational view of a basic structure diagram of a laser apparatus in which the location of a cylindrical lens 80 is varied. In an interior of the mixing emergent barrel 3, an optical axis 81 of the cylindrical lens 80 deviates from the optical axis 11 of the single-core optical fiber 2, while the axis of collimation lens 12 and the condensing lens 13 are coincident with the optical axis 11 of the single-core optical fiber 2.

For laser light 14 emerging from the single-core optical fiber 2, laser light 83 of a portion thereof passes through a hollowed portion 82 of the cylindrical lens 80 and is collimated by the collimation lens 12 to be then focused by the focusing lens 13, so as to form a high-luminance focal point 20 that satisfies keyhole welding on a condensing point 17.

On the other hand, an exit angle of laser light 85 that transmits through a non-hollowed portion 84 with a curved surface of the cylindrical lens 80 is slightly changed, and since the optical axis 81 of the cylindrical lens 80 deviates from the main optical axis 11, a condensing point location of the converging point 87 is not just moved frontwards or rearwards and is also deviating from the optical axis in an upward/downward direction. Due to being out of focusing, a lower power density spot 86, compared to the high power density of the condensing point 17, is formed on a working surface 5.

Further, the fourth embodiment provides a universal way that is applicable to the first, second, and third embodiments, and is also applicable to a flat-top cylindrical lens, a partial flat-top cylindrical lens, a multi-curvature cylindrical lens, and an aspheric cylindrical lens. By changing the upward/downward location of the cylindrical lens 80, shifting of a relative position between the high power density spot 20 and the lower power density spot 86 occurs and can greatly change the welding condition.

FIG 5(b) is a diagram showing a mixed spot of a high power density spot and a lower power density spot in case that an optical axis of a cylindrical lens coincides a main optical axis, wherein the high power density spot 100 is located in a middle portion of the lower power density spot 101. 5(c) and 5(d) demonstrate, in case that the optical axis of the cylindrical lens deviates from the main optical axis, the location of the high power density spot 100 does not change, while the lower power density spot 101 is moved upwards/downwards.

In the above-described fourth embodiment, the cylindrical lens can be a convex or concave cylindrical lens, or can also be a flat-top or partly flat-top cylindrical lens, and can also be a multi-curvature or aspheric cylindrical lens.

### EMBODIMENT 5

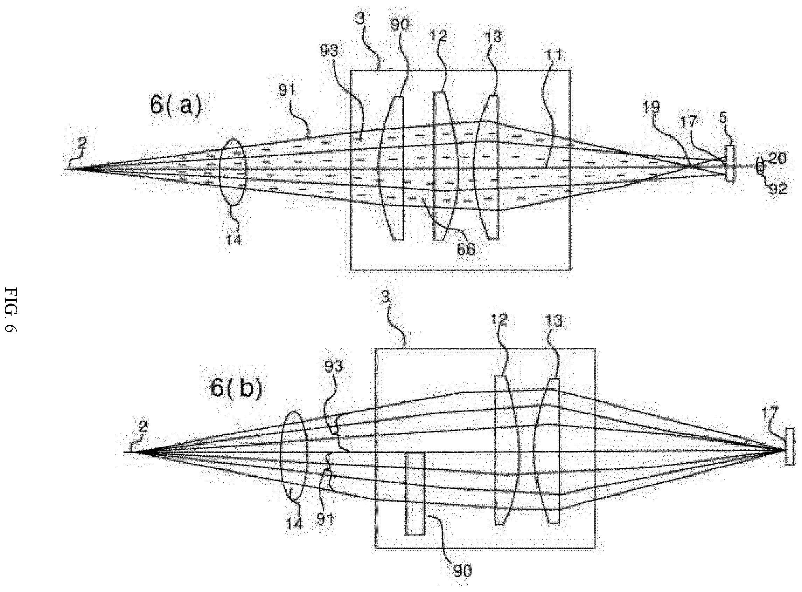

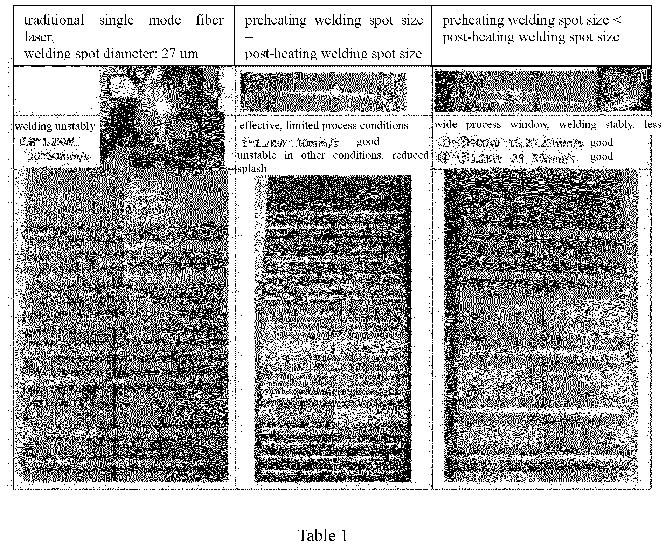

FIG 6(a) is a side elevational view of a basic structure diagram of a laser apparatus according to a fifth embodiment in which a cylindrical lens 90 is arranged between the single-core optical fiber 2 and the collimation lens 12. FIG 6(b) is a top plan view of the cylindrical lens barrel diagram. In an interior of the mixing emergent barrel 3, the cylindrical lens 90, the collimation lens 12, and the condensing lens 13 are sequentially arranged on the same optical axis 11 as the single-core optical fiber 2.

For laser light 14 emerging from the single-core optical fiber 2, a portion 91 of laser light transmits through a curved surface portion of the cylindrical lens 90 and an angle of incident light is slightly changed, and after transmitting through the collimation lens 12, transmits, in a non-parallel form, through the focusing lens 13 to get focused, so as to get converged at a site 19 that is slightly frontwards of the converging point and then diffused again. Due to being out of focusing, a lower power density spot 92, compared to the high power density of the condensing point 17, is formed on a working surface 5.

On the other hand, laser light 93 that do not transmit through the cylindrical lens 90 is collimated by the collimation lens 12 and then transmits through the focusing lens 13 to get focused, so as to form a high-luminance focal point 20 that satisfies keyhole welding on a condensing point 17.

Further, by moving the location of the cylindrical lens 90, an amount of incident light thereof is adjusted, so as to adjust an intensity ratio between the high power density spot 20 and the lower power density spot 45.

Further, the cylindrical lens described in Embodiment 5 can be a convex or concave cylindrical lens, or can also be a flat-top or partly flat-top cylindrical lens, and can also be a multi-curvature or aspheric cylindrical lens.

Further, the cylindrical lens described in Embodiment 5 can be, similar to Embodiment 1, arranged between the optical fiber 2 and the collimation lens 12, or can be, similar to Embodiment 2, arranged between the collimation lens 12 and the condensing lens 13, or can be, similar to Embodiment 3, arranged behind the condensing lens 13.

Further, the cylindrical lens described in Embodiment 5 can realize an effect of adjusting a relative position between the high power density spot 20 and the lower power density spot 92 by adjusting positions of the optical axis of the cylindrical lens and the main optical axis, similar to Embodiment 4.

In the above-described embodiments, the single-core optical fiber 2 can equally provide a mixed spot of a high power density spot and a lower power density spot in either a single mode or a multiple mode optical fiber.

Further, in other types of laser devices, such as a galvanometer welding head, a handheld welding head, a YAG laser device, and an LD laser device, by arranging a collimation lens in front of a cylindrical lens, it is also possible to form a mixed spot of a high power density spot and a lower power density spot.

Table 1 shows results of the instant embodiment and the prior art. As shown in Table 1, according to the present invention, it is possible to realize crack-free, high stability, high speed, and high quality laser welding, as compared to the known laser device.

Although the present invention is disclosed by way of the embodiments discussed above, yet the scope of the present invention is not limited thereto. Under a condition of not departing from the scope of the present invention as defined in the appended claims, components discussed above can be replaced with similar or equivalent components that are familiar to those skilled in the art.

## Claims

1. A laser welding apparatus comprising a single-core optical fiber (2) and a barrel (3) configured for beam shaping and converging of emergent light from the single-core optical fiber in order to realize combined welding of a high power density spot (20, 100) and a lower power density spot (21, 33, 45, 53, 92, 101), the laser welding apparatus being **characterized in that**:
in an interior of the barrel, a cylindrical lens (10, 30, 80, 90), a collimation lens (12), and a condensing lens (13) are sequentially arranged on a same optical axis as the single-core optical fiber, the cylindrical lens being arranged in the interior of the barrel and located between an output of the optical fiber and the collimation lens, the cylindrical lens having a focal distance that is longer than that of the condensing lens, a hollowed portion (15, 82) of the cylindrical lens being arranged in a light beam emerging from the optical fiber; or wherein, in an interior of the barrel, a collimation lens (12), a cylindrical lens (40, 50, 80, 90), and a condensing lens (13) are sequentially arranged on a same optical axis as the single-core optical fiber, the cylindrical lens being arranged in the interior of the barrel and located between the collimation lens and the condensing lens, the cylindrical lens having a focal distance that is longer than that of the condensing lens, a hollowed portion (41, 82) of the cylindrical lens being arranged in a collimated light beam emerging from the collimation lens ; or wherein, in an interior of the barrel, a collimation lens (12), a condensing lens (13), and a cylindrical lens (60, 70, 80, 90) are sequentially arranged on a same optical axis as the single-core optical fiber, the cylindrical lens being arranged in the interior of the barrel and located behind the condensing lens, the cylindrical lens having a focal distance that is longer than that of the condensing lens, a hollowed portion (61, 82) of the cylindrical lens being arranged in a focused light beam emerging from the condensing lens;
such that the high power density spot is a circular spot having a diameter of 10-200um, and the lower power density spot has a shape that is one of an ellipse, a rectangle, and a strip, and such that the lower power density spot has a length in a range of 100-10000 µm and a width in a range of 10-200 µm;
**in that** the laser welding apparatus is configured to switch cylindrical lenses (10) having different hollowed portions for varying the size of the hollowed portion of the cylindrical lens (10), so that intensity values of the high power density spot and the lower power density spot can be adjusted;
**in that** the laser welding apparatus further comprises means for moving the cylindrical lens frontwards or rearwards, so that the intensity values of the high power density spot and the lower power density spot can be changed.

2. The laser apparatus according to claim 1, **characterized in that** the cylindrical lens is one of a plano-convex cylindrical lens, a plano-concave cylindrical lens, a flat-top cylindrical lens, a non-flat-top cylindrical lens, a double-convex cylindrical lens, a double-concave cylindrical lens, and an aspheric cylindrical lens.

3. The laser apparatus according to claim 2, **characterized in that** with respect to the condensing lens, the cylindrical lens is out of focus at a condensing point of the condensing lens and provides a strip-like spot having a length of 100-10000µm and a width of 10-200µm.

4. The laser apparatus according to claim 2, **characterized in that** in laser light emerging from the single-core optical fiber, a portion of the laser light that passes through the hollowed portion of the cylindrical lens is first collimated by the collimation lens and then condensed by the condensing lens, so as to form a high-luminance point that satisfies keyhole welding on a condensing point of the condensing lens.

5. The laser apparatus according to claim 1, **characterized in that** the switching of cylindrical lenses (10) having different hollowed portions in use allows the adjustment of intensity values of the lower power density spot.

6. The laser apparatus according to any one of claims 1 to 5, **characterized in that** a range of adjustment of the intensity value of the high power density spot is 20-100%, and a range of adjustment of the intensity value of the lower power density spot is 0-80%.

7. The laser apparatus according to any one of claims 1 to 6, **characterized in that** by the means for moving the cylindrical lens (1), a relative position of the high power density spot and the lower power density spot is changed.

8. The laser apparatus according to claim 1, **characterized in that** the cylindrical lens is a convex cylindrical lens located between the optical fiber (2) and the collimation lens (12), a focusing point of the high power density spot is located at a light converging point (17) and a focusing point of the lower power density spot is located frontward of the light converging point (17).

9. The laser apparatus according to claim 8, **characterized in that** in a direction of a top plan view, the cylindrical lens shows no variation of curvature such that the high power density spot is a circular high power density spot and the lower power density spot is an elongate strip like lower power density spot.

10. The laser apparatus according to claim 1, **characterized in that** the cylindrical lens is a concave cylindrical lens located between the collimation lens (12) and the condensing lens (13), a focusing point of the high power density spot is located at a light converging point (17) and a focusing point of the lower power density spot is located rearward of the light converging point (17).

## Patentansprüche

1. - Laserschweißvorrichtung, umfassend einen Einzeladerlichtleiter (2) und einen Tubus (3), der zur Strahlformung und zum Konvergieren von aus dem Einzeladerlichtleiter austretendem Licht konfiguriert ist, um kombiniertes Schweißen einer Stelle mit hoher Leistungsdichte (20, 100) und einer Stelle mit niedrigerer Leistungsdichte (21, 33, 45, 53, 92, 101) zu erzielen, wobei die Laserschweißvorrichtung **dadurch gekennzeichnet, dass**:
in einem Inneren des Tubus eine zylindrische Linse (10, 30, 80, 90), eine Kollimationslinse (12), und eine Kondensorlinse (13) nacheinander auf derselben optischen Achse wie der Einzeladerlichtleiter angeordnet sind, wobei die zylindrische Linse im Inneren des Tubus und zwischen einem Ausgang des Lichtwellenleiters und der Kollimationslinse angeordnet ist, wobei die zylindrische Linse eine längere Brennweite als die Kondensorlinse aufweist, wobei ein vertiefter Abschnitt (15, 82) der zylindrischen Linse in einem Lichtstrahl angeordnet ist, der aus dem Lichtwellenleiter austritt; oder wobei in einem Inneren des Tubus eine Kollimationslinse (12), eine zylindrische Linse (40, 50, 80, 90), und eine Kondensorlinse (13) nacheinander auf derselben optischen Achse wie der Einzeladerlichtleiter angeordnet sind, wobei die zylindrische Linse im Inneren des Tubus und zwischen der Kollimationslinse und der Kondensorlinse angeordnet ist, wobei die zylindrische Linse eine längere Brennweite als die Kondensorlinse aufweist, wobei ein vertiefter Abschnitt (41, 82) der zylindrischen Linse in einem kollimierten Lichtstrahl angeordnet ist, der aus der Kollimationslinse austritt; oder wobei in einem Inneren des Tubus eine Kollimationslinse (12), eine Kondensorlinse (13), und eine zylindrische Linse (60, 70, 80, 90) nacheinander auf derselben optischen Achse wie der Einzeladerlichtleiter angeordnet sind, wobei die zylindrische Linse im Inneren des Tubus und hinter der Kondensorlinse angeordnet ist, wobei die zylindrische Linse eine längere Brennweite als die Kondensorlinse aufweist, wobei ein vertiefter Abschnitt (61, 82) der zylindrischen Linse in einem fokussierten Lichtstrahl angeordnet ist, der aus der Kondensorlinse austritt;
derart, dass die Stelle mit hoher Leistungsdichte eine kreisförmige Stelle mit einem Durchmesser von 10-200 µm ist und die Stelle mit niedrigerer Leistungsdichte eine Form aufweist, die eines von einer Ellipse, einem Rechteck und einem Streifen ist, und derart, dass die Stelle mit niedrigerer Leistungsdichte eine Länge in einem Bereich von 100-10000 µm und eine Breite in einem Bereich von 10-200 µm aufweist;
wobei die Laserschweißvorrichtung dazu konfiguriert ist, zylindrische Linsen (10) mit unterschiedlichen vertieften Abschnitten umzuschalten, um die Größe des vertieften Abschnitts der zylindrischen Linse (10) variieren zu lassen, sodass Intensitätswerte der Stelle mit hoher Leistungsdichte und der Stelle mit niedrigerer Leistungsdichte eingestellt werden können;
wobei die Laserschweißvorrichtung ferner eine Einrichtung zum Bewegen der zylindrische Linse nach vorne oder nach hinten umfasst, sodass die Intensitätswerte der Stelle mit hoher Leistungsdichte und der Stelle mit niedrigerer Leistungsdichte geändert werden können.

2. - Laservorrichtung nach Anspruch 1, **dadurch gekennzeichnet, dass** die zylindrische Linse eine von einer planokonvexen zylindrischen Linse, eine planokonkaven zylindrischen Linse, einer zylindrischen Linse mit flacher Oberseite, einer zylindrischen Linse mit nichtflacher Oberseite, einer doppelt konvexen zylindrischen Linse, einer doppelt konkaven zylindrischen Linse und einer asphärischen zylindrischen Linse ist.

3. - Laservorrichtung nach Anspruch 2, **dadurch gekennzeichnet, dass** hinsichtlich der Kondensorlinse die zylindrische Linse an einem Kondensationspunkt der Kondensorlinse außer Fokus ist und eine streifenartige Stelle mit einer Länge von 100-10000 µm und einer Breite von 10-200 µm bereitstellt.

4. - Laservorrichtung nach Anspruch 2, **dadurch gekennzeichnet, dass** in dem Laserlicht, das aus dem Einzeladerlichtwellenleiter austritt, ein Teil des Laserlichts, der durch den vertieften Abschnitt der zylindrischen Linse tritt, zunächst durch die Kollimationslinse kollimiert und dann durch die Kondensorlinse kondensiert wird, sodass er einen Punkt hoher Leuchtdichte erzeugt, der Stichlochschweißen an einem Kondensationspunkt der Kondensorlinse genügt.

5. - Laservorrichtung nach Anspruch 1, **dadurch gekennzeichnet, dass** das Umschalten von zylindrischen Linsen (10) mit unterschiedlichen vertieften Abschnitten im Gebrauch eine Einstellung von Intensitätswerten der Stelle mit niedrigerer Leistungsdichte ermöglicht.

6. - Laservorrichtung nach einem der Ansprüche 1 bis 5, **dadurch gekennzeichnet, dass** ein Einstellbereich des Intensitätswerts der Stelle mit hoher Leistungsdichte 20-100 % beträgt und ein Einstellbereich des Intensitätswerts der Stelle mit niedrigerer Leistungsdichte 0-80 % beträgt.

7. - Laservorrichtung nach einem der Ansprüche 1 bis 6, **dadurch gekennzeichnet, dass** durch die Einrichtung zum Bewegen der zylindrischen Linse (1) eine relative Position der Stelle mit hoher Leistungsdichte und der Stelle mit niedrigerer Leistungsdichte geändert wird.

8. - Laservorrichtung nach Anspruch 1, **dadurch gekennzeichnet, dass** die zylindrische Linse eine konvexe zylindrische Linse ist, die zwischen dem Lichtwellenleiter (2) und der Kollimationslinse (12) liegt, ein Fokuspunkt der Stelle mit hoher Leistungsdichte an einem Lichtkonvergenzpunkt (17) liegt und ein Fokuspunkt der Stelle mit niedrigerer Leistungsdichte vor dem Lichtkonvergenzpunkt (17) liegt.

9. - Laservorrichtung nach Anspruch 8, **dadurch gekennzeichnet, dass** die zylindrische Linse in einer Richtung der Draufsicht keine Variation der Krümmung aufweist, derart, dass die Stelle mit hoher Leistungsdichte eine kreisförmige Stelle mit hoher Leistungsdichte ist und die Stelle mit niedrigerer Leistungsdichte eine längliche streifenartige Stelle mit niedrigerer Leistungsdichte ist.

10. - Laservorrichtung nach Anspruch 1, **dadurch gekennzeichnet, dass** die zylindrische Linse eine konkave zylindrische Linse ist, die zwischen der Kollimationslinse (12) und der Kondensorlinse (13) angeordnet ist, ein Fokuspunkt der Stelle mit hoher Leistungsdichte an einem Lichtkonvergenzpunkt (17) liegt und ein Fokuspunkt der Stelle mit niedrigerer Leistungsdichte hinter dem Lichtkonvergenzpunkt (17) liegt.

## Revendications

1. - Un appareil de soudage laser comprenant une fibre optique unipolaire (2) et un barillet (3) configuré pour former un faisceau et pour faire converger une lumière émergeant d'une fibre optique unipolaire afin de réaliser le soudage combiné d'un point de densité à haute puissance (20, 100) et d'un point de densité à puissance inférieure (21, 33, 45, 53, 92, 101), l'appareil de soudage laser étant **caractérisé en ce que** :
dans lequel, l'intérieur du barillet, une lentille cylindrique (10, 30, 80, 90), une lentille de collimation (12), et une lentille de condensation (13) sont agencés de façon séquentielle sur le même axe optique que la fibre optique unipolaire, la lentille cylindrique étant agencée à l'intérieur du barillet et située entre une sortie de la fibre optique et la lentille de collimation, la lentille cylindrique étant dotée d'une distance focale qui est plus longue que celle de la lentille condensation, une partie creuse (15, 82) de la lentille cylindrique étant agencée dans un faisceau de lumière émergeant de la fibre optique ;
ou dans lequel l'intérieur du barillet, une lentille de collimation (12), une lentille cylindrique (40, 50, 80, 90), et une lentille de condensation (13) sont agencés de façon séquentielle sur le même axe optique que la fibre optique unipolaire, la lentille cylindrique étant agencée à l'intérieur du barillet et située entre la lentille de collimation et la lentille de condensation, la lentille cylindrique étant dotée d'une distance focale qui est plus longue que celle de la lentille condensation, une partie creuse (41, 82) de la lentille cylindrique étant agencée dans un faisceau de lumière collimaté émergeant de la lentille de collimation ; ou dans lequel l'intérieur du barillet, une lentille de collimation (12), une lentille de condensation (13), et une lentille cylindrique (60, 70, 80, 90) sont agencés de façon séquentielle sur le même axe optique que la fibre optique unipolaire, la lentille cylindrique étant agencée à l'intérieur du barillet et
située derrière la lentille de condensation, la lentille cylindrique étant dotée d'une distance focale qui est plus longue que celle de la lentille condensation, une partie creuse (61, 82) de la lentille cylindrique étant agencée dans un faisceau de lumière focalisé émergeant de la lentille de condensation ;
de sorte que le point de densité à haute puissance est un point circulaire muni d'un diamètre de 10-200 um, et le point de densité à puissance inférieure est doté d'une forme qui est celle d'une ellipse, d'un rectangle et d'une bande, de sorte que le point de densité à haute puissance est doté d'une longueur d'une plage de 100-10000 µm et d'une largeur d'une plage de 10-200 µm ;
**en ce que** l'appareil de soudage laser est configuré pour permuter les lentilles cylindriques (10) qui sont munies de différentes parties creuses pour faire varier la taille de la partie creuse des lentilles cylindriques (10), afin que les valeurs d'intensité du point de densité à haute puissance et du point de densité à puissance inférieure puissent être ajustées ;
**en ce que** l'appareil de soudage laser comprend en outre un moyen de déplacer la lentille cylindrique vers l'avant ou vers l'arrière, afin que les valeurs d'intensité du point de densité à haute puissance et du point de densité à puissance inférieure puissent être changées.

2. - Un appareil de soudage laser selon la revendication 1, **caractérisé en ce que** la lentille cylindrique est l'une parmi une lentille cylindrique à plan-convexe, une lentille cylindrique à plan-concave, une lentille cylindrique à sommet plat, une lentille cylindrique à sommet non plat, une lentille cylindrique biconvexe, une lentille cylindrique biconcave, et une lentille cylindrique asphérique.

3. - Un appareil de soudage laser selon la revendication 2, **caractérisé en ce que** par rapport à la lentille de condensation, la lentille cylindrique est hors foyer à un point de condensation de la lentille de condensation et fournit un point en forme de bande doté d'une longueur de 100-10000 pm et d'une largeur de 10-200 µm.

4. - Un appareil de soudage laser selon la revendication 2, **caractérisé en ce que** dans la lumière laser émergeant de la fibre optique unipolaire, une partie de la lumière laser qui passe à travers la partie creuse de la lentille cylindrique est d'abord collimatée par la lentille de collimation puis condensée par la lentille de condensation, afin de former un point de haute luminosité qui permet le soudage par trou de serrure sur un point de condensation de la lentille de condensation.

5. - Un appareil de soudage laser selon la revendication 1, **caractérisé en ce que** la permutation des lentilles cylindriques (10) munies de différentes parties creuses utilisées permet l'ajustement des valeurs d'intensité du point de densité à puissance inférieure.

6. - Un appareil de soudage laser selon l'une quelconque des revendications 1 à 5, **caractérisé en ce que** la plage d'ajustement des valeurs d'intensité du point de densité à haute puissance est de 20-100%, et la plage d'ajustement des valeurs d'intensité du point de densité à puissance inférieure est de 0-80%.

7. - Un appareil de soudage laser selon l'une quelconque des revendications 1 à 6, **caractérisé en ce que** par moyen de déplacer la lentille cylindrique (1), une partie relative position du point de densité à haute puissance et du point de densité à puissance inférieure est modifiée.

8. - Un appareil de soudage laser selon la revendication 1, **caractérisé en ce que** la lentille cylindrique est une lentille cylindrique convexe située entre la fibre optique (2) et la lentille de collimation (12), le point focal du point de densité à haute puissance est situé à un point de convergence de la lumière (17) et le point focal du point de densité à puissance inférieure est situé vers l'avant du point de convergence de la lumière (17).

9. - Un appareil de soudage laser selon la revendication 8, **caractérisé en ce que** dans le sens d'une vue en plan de dessus, la lentille cylindrique ne présente pas de variation de courbure de sorte que le point de densité à haute puissance est un point de densité à haute puissance circulaire et le point de densité à puissance inférieure est un point de densité à puissance inférieure en bande élongée.

10. - Un appareil de soudage laser selon la revendication 1, **caractérisé en ce que** la lentille cylindrique est une lentille cylindrique concave située entre la lentille de collimation (12) et la lentille de condensation (13), le point focal du point de densité à haute puissance est situé à un point de convergence de la lumière (17) et le point focal du point de densité à puissance inférieure est situé vers l'arrière du point de convergence de la lumière (17).
